# EUROPEAN PATENT APPLICATION

(11) **EP 4 186 364 A1**
(43) Date of publication of application: **31.05.2023**
(21) Application number: 21211536.4
(22) Date of filing: 30.11.2021
(51) Int. Cl.: A01N 33/12, A01N 25/10, A01N 25/34, A01P 1/00, A61L 2/16, C08B 15/00, C08F 255/00, D06M 10/00

(54) **ANTIMICROBIAL TREATMENT OF SUBSTRATES**

(71) Applicant: Livinguard AG, 6330 Cham (CH)
(72) Inventor: The designation of the inventor has not yet been filed
(74) Representative: Bardehle Pagenberg Partnerschaft mbB Patentanwälte Rechtsanwälte

(57) **Abstract**

The present invention relates generally to an antimicrobial treatment of substrates. In particular it relates to a method for rendering a substrate antimicrobial, preferably self-disinfecting, a substrate that can be obtained by such a method, an antimicrobial or preferably self-disinfecting substrate, and the use of a chemical for rendering a substrate antimicrobial or preferably self-disinfecting.

## Description

### TECHNICAL FIELD

The present invention relates generally to an antimicrobial treatment of substrates. In particular it relates to a method for rendering a substrate antimicrobial, preferably self-disinfecting, a substrate that can be obtained by such a method, an antimicrobial or preferably self-disinfecting substrate, and the use of a chemical for rendering a substrate antimicrobial or preferably self-disinfecting.

### BACKGROUND

Antimicrobial substrates play an ever-demanding role. Their field of application expands over every industrial, life-style, and health care sector. Examples are towels, masks, medical garments or other items used in hospitals, clothes in general, cleaning equipment, test equipment in laboratories, e.g. test tubes, and the like.

These substrates are facing conflicting performance requirements. First of all, there is the requirement of high antimicrobial performance. Antimicrobial performance can be measured for instance by way of the reduction of the number of bacteria or other microbes in logarithmic ("log") scale on the treated substrates. Fabrics for instance are tested according to the ASTM E 2149-10 test method or the AATCC test method 100-2012/2019 or the like.

For many applications, it is desirable that substrates are not only antimicrobial, but even self-disinfecting. A substrate can be said to be self-disinfecting if it destroys substantially all - e.g. 99.999% (5 log) - of the microbes of a certain type (e.g. *Escherichia coli* ATCC 25922 and/or *Staphylococcus aureus* SA 113) located on its surface within a short period of time (e.g. 5 or 10 minutes). In this manner, no active measures such as applying antimicrobial liquids or heat are necessary to disinfect the surface of the substrate after contamination.

Secondly, there should be as little leaching of the antimicrobial agents as possible when the substrate is used or washed. Attaching an antimicrobial agent to a substrate in a permanent manner is a prerequisite for obtaining non- or low-leaching properties. Low-leaching substrates such as textiles can maintain their antimicrobial or self-disinfecting properties even after washing and are therefore reusable. Other antimicrobial articles such as touch screens may maintain their antimicrobial or self-disinfecting properties during a long lifetime if they are non- or low-leaching. Even for single-use articles such as drinking glasses or surgical gloves made of nitrile, non- or low-leaching is desirable because the agents should not be released into the mouth of a user contacting the drinking glass or bottle or a wound touched by the glove. However, to achieve attachment of antimicrobial agents in a reliable manner is demanding and imposes a great challenge.

Thirdly, the agents used for rendering the substrate antimicrobial should be substantially non-toxic, i.e. they should not be dangerous for users or individuals or any kind of living entity. In this manner, use of the substrate is safe even if small amounts of antimicrobial agents leach and come into contact with the skin, wounds or mucosa of the user. An example for an agent known to have antimicrobial properties and having a low toxicity is poly[2-(methacryloyloxy)ethyl] trimethylammonium chloride] or polyMETAC.

Several attempts have been made in the prior art to bridge the gap between these requirements and to achieve the aforementioned challenging properties of an antimicrobial substrate.

Document (1) 10.1016/j.radphyschem.2009.03.011 (DOI), titled "Synthesis of antibacterial cotton fabric by radiation-induced grafting of[2-(Methacryloyloxy)ethyl]trimethylammonium chloride (MAETC) onto cotton", accepted on March 22, 209 in Elsevier "Radiation Physics and Chemistry" relates to the synthesis of antibacterial cotton. Gamma radiation was used to covalently link polymer chains of [2-(Methacryloyloxy)ethyl]-trimethylammonium chloride (MAETC, alias METAC) to cotton fabric by mutual radiation grafting. Radiation polymerized poly (MAETC) and MAETC-g-cotton samples were tested for their antibacterial efficacy against various bacteria. The document describes that the MAETC polymer was first produced from the monomers, i.e. by synthesis of PMAETC by gamma radiation. Then a mutual radiation grafting method was used to graft the polymerized MAETC onto cotton cellulose, i.e. radiation grafting. The antimicrobial tests performed in Document (1) show a maximum antimicrobial activity of 5 log cycle kill in 24 h against S. aureus. For this antimicrobial activity, an extent of grafting of up to 33% of PMAETC by textile weight was required. For E. coli, B. cereus and P. fluorescens the kill rates are reported to be lower. In 4 h the highest kill rate was reported to be slightly less than 2 log against S. aureus, requiring a grafting extent of 33%.

Other prior art documents describe treating surfaces with different polymers, i.e. other than polymers of METAC, or a mix of polymers in an attempt to provide for antimicrobial activity of the surfaces. For instance, documents 10.1016/j.cej.2017.09.142 (DOI) and 10.1021/acs.iecr.8b01730 (DOI) describe antibacterial surfaces which consist of two polymer brushes with two-layer architecture, wherein the surface is made of salt-responsive polyzwitterionic brush material. Reportedly, 93.4% and 92.6% of the attached E. coli and S. aureus, respectively, were killed. Document 10.1016/j.porgcoat.2019.01.038 (DOI) relates to antibacterial surfaces, in particular silica surfaces. The treated surfaces showed a kill rate of E. coli by 93% after 6 h and 99% after 72 h, as well as S. aureus by 81% at 2 h and 90% at 72 h. Document 10.3390/polym10090947 (DOI) investigated antimicrobial activity of polymerized METAC without adherence to a surface.

None of the attempts in the above-mentioned prior art achieves very high antimicrobial efficiency such as required for self-disinfecting substrates. For instance, the highest killing rate is described in Document (1) with 5 log in 24 h and less than 2 log in 4 h. Other documents report even lower killing rates. These killing rates, although in the documents themselves referred to as high, are not sufficient in applications where very high killing rates are required, e.g. for providing self-disinfecting substrates.

### SUMMARY OF THE INVENTION

It is thus an object of the present invention to overcome some or all of the deficiencies of the prior art, in particular by treating a substrate with an agent having low toxicity such that the substrate is rendered antimicrobial in a permanent manner. A high antimicrobial performance should be achieved, providing for effective killing of microorganisms, preferably such that the substrate become self-disinfecting. Furthermore, low-leaching properties should be achieved.

Some or all of the objects of the present invention are achieved by the subject matter of the independent claims. Preferred embodiments are subject of the dependent claims, and the skilled person finds hints for other suitable embodiments of the present invention through the overall disclosure of the present application.

The inventors realized that one way of achieving a high antimicrobial efficiency is to render the surface of the substrate highly positively charged or cationic. The membrane of most microbes is negatively charged, and it is believed that the positively charged substrate surfaces attract the negatively charged microbe membranes and destroy if once microbe comes close enough to the surface.

The inventors found that applying METAC monomers rather than polyMETAC to the surface of a substrate can overcome the hurdles and disadvantages of the prior art. In particular, the invention is based on the principle of rendering substrates highly positively charged by binding METAC monomers to their surface.

The positively charged part of the molecule is exposed towards the outside, i.e. away from the surface of the substrate allowing for the maximum antimicrobial activity of each molecule. Furthermore, the inventors found that per surface area, many more METAC molecules can be bound to the substrate as compared to polyMETAC coatings, further increasing the antimicrobial activity of the coating. The inventors believe that one reason for that is that due to its charges, the polyMETAC exhibits substantial repelling forces which makes it impossible or at least very difficult to coat substrates with it as high density. Furthermore, steric hindrance of polymerized molecules, which typically have large atomic chains, is believed to prevent binding of more molecules per surface area as compared to monomers. Finally, the majority of the charges of a METAC molecule, i.e. of the METAC monomer, gets lost during the polymerization reaction resulting in polyMETAC.

A suitable METAC chemical has the following formula.

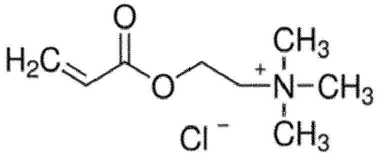

It is a quaternary ammonium chloride, composed of a positively charged quaternary amine (right hand side in above formula) and a short alkyl chain with methyl methacrylate (left hand side in above formula). The toxicity of METAC monomers is similarly low as that of polyMETAC.

The METAC monomer as such only shows a low antimicrobial activity, as will be further discussed below. However, when the monomer is bound to the surface of a substrate, a surprisingly high antimicrobial activity can be achieved, presumably because the monomers can be bound to the surface at high density and uniformly oriented with the positively charged quaternary amine groups being exposed towards the outside, i.e. away from the surface of the substrate.

As will be described below, the inventors found ways to bind the METAC monomers in a reliable manner to a great variety of substrates, such as cellulose (in particular cotton), nitrile, and glass.

A first embodiment of the invention is directed to a method for rendering a substrate antimicrobial, in particular self-disinfecting, said method comprising the following steps:
(a) applying [2-(methacryloyloxy)ethyl]trimethylammonium chloride (METAC monomer) and an initiator to a substrate,
(b) optionally drying the substrate, and
(c) triggering a reaction between the substrate and the METAC monomer.

Without wishing to be bound to any theory, it is believed that the METAC monomer preferably binds covalently to the substrate, in particular to functional groups of the substrate. Thus, beneficially it can be achieved that the monomers bind in a dense manner, preferably in a very dense manner to the substrate. For instance, it is believed that the monomers of the METAC bind better and denser to the surface than polymers do, since steric hindrance or steric obstruction is reduced. Thus, more molecules per surface area can be adhered. This could in particular be the case if large polymeric chains are present that would prevent proper binding to a substrate. Using METAC monomers may thus make it possible to charge the surface to a higher degree, which results in higher killing rates compared to the prior art.

An initiator is a source of any chemical species which may react with a monomer or molecule and is able to form chemical bonds, which leads to a formation of a compound. For instance, there could be a radial initiator which produces a radial from a monomer or molecule, which subsequently reacts further with another chemical species. Initiators are used in a broad range of chemical applications.

The application of the METAC monomer and the initiator to the substrate in step (a) will typically made together in one preparation but may also be made separately. For instance, it could be the case that first the METAC monomer is applied in a first sub-step and then the initiator is applied in a subsequent sub-step. Likewise, it is also possible that the initiator is applied in a first sub-step and then the METAC monomer is applied in a second sub-step. It is only required that the METAC monomer comes in contact with the initiator.

Optionally a drying step (b) is performed. When drying the substrate, any molecules or compounds other than the METAC monomer and the initiator can substantially be removed, for instance water or another solvent. Thus, the METAC monomer and the initiator can beneficially be placed in the direct vicinity of the surface, and the amount of METAC monomer and initiator in direct contact with the surface can be increased.

In step (c), triggering of the reaction is performed, i.e. the binding reaction between the substrate and the METAC monomer with the help of the initiator is started. The addition of the initiator itself is not sufficient for the reaction to start. Thus, the triggering is achieved for instance by providing the system with energy, e.g. in the form of light of certain wavelengths, e.g. UV light, or of heat.

According to a 2nd embodiment, in the method of the first embodiment, the initiator facilitates triggering a reaction between the substrate and the METAC monomer.

The reaction between the substrate and the METAC monomers is enhanced by the initiator. The initiator in turn can be activated by an external stimulus, like the application of UV light or heat. The initiator only drives the reaction between the substrate and the METAC monomers in its activated form. As a result of the reaction, the METAC monomers are adhered to the surface of the substrate.

According to a 3rd embodiment, in the method of the second embodiment, the reaction is a binding reaction.

Binding reactions are typically stronger as compared to instance ionic bonding. This improves low-leaching properties.

According to a 4th embodiment, in the method of any one of the preceding embodiments, the initiator is a photoinitiator, and the reaction between the substrate and the METAC monomer is triggered by irradiating the substrate with ultraviolet (UV) light.

Further, provision of UV-light is economic and easy to establish. Photoinitiators are chemical compounds that can decompose in a photolysis reaction after absorption of light of a certain wavelength or a wavelength range, e.g. UV light. In doing so, the photoinitiators form reactive species which can initiate a reaction which is triggered, e.g. by energy supply. The reactive species are typically of the types of radicals or cations.

According to a 5th embodiment, in the method of the 4th embodiment the photoinitiator is water-soluble, particularly wherein the photoinitiator is lithium phenyl(2,4,6-trimethylbenzoyl)phosphinate (LAP).

Water-soluble photoinitiators are beneficial in case the photoinitiator is provided in an aqueous solution. LAP is a preferred water-soluble photoinitiator as it is commercially widely available and works well for binding METAC monomers to a variety of substrates.

According to a 6th embodiment, in the method of the 4th embodiment the photoinitiator has a low water solubility, in particular of at most 20 mg/l, preferably at most 5 mg/l, more preferably at most 4 mg/l, most preferably at most 3.3 mg/L at 20 °C according to OECD Guideline 105, Flask method, particularly wherein the photoinitiator is diphenyl(2,4,6-trimethylbenzoyl)phosphine oxide (TPO).

Photoinitiators with low water solubility are beneficial in case the photoinitiator is provided in a non-aqueous solution. TPO is a preferred photoinitiator with low water solubility as it is commercially widely available and works well for binding METAC monomers to a variety of substrates. Furthermore, with this embodiment it can be ensured that other compounds which are not water-soluble can be solved in a solution containing the initiator.

A low water solubility means a water solubility of at most 20 mg/l, preferably at most 5 mg/l, more preferably at most 4 mg/l, most preferably at most 3.3 mg/L at 20 °C according to OECD Guideline 105, Flask method. As an example, according to this measurement method, 3.3 mg of TPO can be solved in 1 liter of water. Alternatively, a low water solubility can also mean a water solubility of at most 30 mg/L, preferably at most 20 mg/L, more preferably at most 15 mg/L, most preferably at most 11.9 mg/L at 20 °C according to OECD Guideline 105, Column elution. As an example, according to this measurement method, 11.9 mg of TPO can be solved in 1 liter of water.

According to a 7th embodiment, in the method of any one of the 1st to 3rd embodiments the initiator is a thermoinitiator and the reaction between the substrate and the METAC monomer is triggered by applying heat to the substrate.

A thermoinitiator facilitates the production of the antimicrobial substrate, since it is an initiator which is readily available, and applying heat to a substrate in manufacturing processes represents a typical process step which can be implemented without rearrangement of the production plant. As an example, the heat may be applied by a stenter which is available in a typical production plant for finishing textiles. This bears the potential of easy inexpensive adaptions to existing plants. Furthermore, when using thermoinitiators, the heat applied in order to trigger the reaction could be used in conjunction with drying step, where heat may also be applied.

According to an 8th embodiment, in the method of the preceding embodiment the heat is applied to the substrate by exposing the substrate to an ambient temperature between 40 °C and 200 °C, preferably between 50 °C and 120 °C, more preferably between 60 °C and 100 °C.

With this embodiment it is beneficially provided for that the heat applied to the substrate or the heat the substrate is exposed to is not too high and not too low. In particular, it could be beneficial to provide for a temperature higher than 40 °C to provide for a proper triggering and initiation of the reaction. Further, a temperature below 200 °C is beneficial, since otherwise, the substrate could be damaged, destroyed or otherwise adversely affected. The same applies for other temperatures prevalent in the production process. A lower temperature is generally protects the substrate from becoming damaged, but a sufficiently high temperature is generally required to achieve certain results, for example proper adherence of the METAC monomer to the substrate.

According to a 9th embodiment, in the method of any one of the preceding embodiments the METAC monomer and the initiator are applied to a surface of the substrate which comprises functional groups being capable of reacting with the METAC monomer.

The functional groups provide for proper adherence, in particular bonding by way of covalent binding can be achieved. Furthermore, smaller compounds appear to bear the potential to better react with functional groups of a surface, since less steric hindrance may be provided as compared to bigger compounds or longer chains of atoms.

According to a 10th embodiment, in the method of any one of the preceding embodiments the METAC monomer and/or the initiator are applied to the substrate by dipping the substrate into one or more preparations comprising the METAC monomer and/or the initiator.

With dipping, it can be beneficially ensured that an entire surface of the substrate is covered by the preparations, without leaving any blank spots. In case the initiator is present in the preparation, the initiator may be beneficially distributed evenly and may thus provide for an even triggering of the initiation of the reaction. As an example, in a padding process of textile finishing, a fabric is dipped into a liquid in a first step and excess liquid is removed by a padding mangle in a subsequent step. In an exhaust process, the textile is dipped in a liquid for an extended period of time.

According to an 11th embodiment, in the method of any one of the preceding embodiments at least part of the METAC monomer and at least part of the initiator are applied to the substrate as a liquid preparation comprising the part of the METAC monomer and the part of the initiator.

Adding the METAC monomer and the initiator to the same preparation ensures that the METAC monomer is properly mixed with the initiator, and substantially all parts of the substrate may be covered by the METAC monomer and the initiator.

According to a 12th embodiment, in the method of the preceding embodiment the liquid preparation comprises a solvent, particularly water and/or ethanol.

Depending on the substrate, the way of application, and the type of inititiator, water and/or ethanol may be used. Other solvents may also be applicable. Ethanol can beneficially be used in conjunction with other compounds which would otherwise react if water was used as a solvent, is it is the case for instance if vinylsilane is present.

According to a 13th embodiment, in the method of any one of the 11th to 12th embodiments the liquid preparation comprises the METAC monomer in an amount of 5 to 75% by weight, preferably in an amount of 6 to 60% by weight, more preferably in an amount of 10 to 50% by weight, particularly in an amount of 15 to 40% by weight, and most preferably in an amount of 20 to 30% by weight, and/or the initiator in an amount of 0.01 to 0.5% by weight, particularly in an amount of 0.02 to 0.25% by weight, more particularly in an amount of 0.05 to 0.15% by weight, based on 100% by weight of the liquid preparation.

The concentration of the METAC monomer should ideally be high enough so that a maximum amount of METAC monomer can be bound to the substrate, thereby increasing the antimicrobial efficiency. The optimum concentration of the initiator will depend on the amount of initiator which is required to initiate binding of preferably all or at least most of the METAC monomer applied to the substrate.

According to a 14th embodiment, in the method of any one of the preceding embodiments the drying step (b) is carried out at a temperature carried out at a temperature of at least 40 °C, preferably at least 60 °C, more preferably at least 80 °C, even more preferably at least 100 °C, and most preferably at least 110 °C, and/or at most 200 °C, preferably at most 180 °C, more preferably at most 160 °C, particularly at most 140 °C, most preferably at most 130 °C.

Drying with heat has the primary advantage of greatly accelerating the drying process. Furthermore, a heat application can provide for a first, preliminary fixing of the METAC monomer and the initiator to the substrate, even before the binding reaction is triggered, so that the METAC monomer and the initiator are not immediately washed away if the substrate is e.g. dipped into a preparation comprising METAC monomer and initiator for a second time, as will be described below.

The heat applied to the substrate within the drying step should not be too high or too low. A lower temperature generally better protects the substrate from becoming damaged, destroyed or otherwise adversely affected. A higher temperature could be generally better to provide for proper preliminary adherence of the METAC monomer and the initiator to the substrate as described above.

According to a 15th embodiment, in the method of any one of the preceding embodiments the sequence of the applying step (a) and the drying step (b) is carried two or more times.

With this embodiment, the amount of the METAC monomer and the initiator applied to the substrate can be increased, and it can be ensured that any spots left blank during the first application of the METAC monomer, and the initiator is filled. Thereby, the antimicrobial efficiency of the substrate may be further increased.

According to a 16th embodiment, in the method of any one of the preceding embodiments after the trigger step (c) the substrate is washed, preferably with water.

According to a 17th embodiment, in the method of any one of the preceding embodiments the substrate is a glass substrate.

According to a 18th embodiment, in the method of any one of the preceding embodiments the substrate is a glass substrate which has been produced by a process comprising a step of treating a surface of the glass by a plasma.

According to a 19th embodiment, in the method of any one of the preceding embodiments the substrate is a glass substrate which has a surface that has been modified by a silane compound.

According to a 20th embodiment, in the method of any one of the 1st to 16th embodiments the substrate is a nitrile rubber substrate, particularly a nitrile rubber glove.

According to a 21st embodiment, in the method of any one of the 1st to 16th embodiments the substrate is a cellulose substrate, particularly cotton.

According to a 22nd embodiment, in the method of the preceding embodiment the cotton has been pre-treated with a solution comprising an initiator, preferably a photoinitiator or a thermoinitiator.

According to a 23rd embodiment, in the method of the preceding embodiment the solution is an aqueous solution and the initiator comprised by the solution is water-soluble.

According to a 24th embodiment, in the method of any one of the 22nd to 23rd embodiments the pre-treatment is carried out by immersing the cotton in the solution, preferably for a period of time of at least 15 minutes, more preferably of at least 30 minutes, even more preferably of at least one hour, particularly of at least 2 hours, most preferably of at least 4 hours.

In an exemplary embodiment, such a treatment is similar to an exhaustion step.

According to a 25th embodiment, in the method of any one of the 1st to 16th embodiments the substrate is a silicon wafer substrate, particularly a silicon wafer having a surface that has been treated with a mixture of sulfuric acid and hydrogen peroxide (Piranha solution).

According to a 26th embodiment, in the method according to any one of the preceding embodiments the thickness of a layer of METAC monomer formed on the substrate is at most 20 nm, preferably at most 15 nm, more preferably at most 12 nm, most preferably at most 10 nm, optionally as measured by ellipsometry.

With this embodiment it is advantageously ensured that the monomer binds to the surface in a dense and sufficient manner, such that antimicrobial activity can be ensured. In particular, higher amounts of surface thickness could typically occur in the case if polymers were formed by the reaction between the METAC monomer and the substrate. A thickness of the METAC layer applied to the substrate as provided above indicates that the METAC is bound to the substrate in the form of monomers, not polymers.

According to a 27th embodiment, in the method according to any one of the preceding embodiments a surface of the substrate has an electrical potential of at least 10 mV, preferably at least 20 mV, more preferably at least 30 mV, even more preferably at least 35 mV, most preferably at least 40 mV, optionally measured according to the zeta-potential measuring method.

The zeta-potential is a specific electrical potential at the slipping plane, i.e. the interface separating mobile fluid from fluid that remains attached to the surface of the molecules. If the measurement was done at the surface of the molecules itself, it could result in much higher values. For molecules and particles that are small, a high zeta-potential can confer stability, meaning that the solution or dispersion will resist aggregation. A high zeta-potential of a substance may advantageously provide for an electrically stabilized system. In addition, it provides for high antimicrobial activity. In an exemplary manner, the zeta-potential can be measured using a SURPASS device, for instance a device of the manufacturer Anton Paar. However, other suitable measurement devices could also be used.

With this 27th embodiment it may beneficially be ensured that a high surface charge is present. This may include a positive charge of the METAC monomer on the surface of the substrate. Use of monomers provides for the benefit that per binding to the substrate a relatively higher charging can be provided as compared to the case in which polymers were bound to the surface. It is believed that polymers provide for relatively less surface charging per atom as compared to METAC monomers. Thus, for the same space used on the surface a high amount of charge could advantageously be achieved according to this embodiment. This could not be achieved using polymers. The electrical potential achieved on the surface supports killing bacteria or other microbes effectively. It may be the case that, if monomers polymerize, there are some charges lost during this polymerization. Thus, the resulting compound has less charging relative to the number of atoms in the coating as compared to a monomer. It was found that on a nitrile substrate, the substrate treated according to the invention comprises an electrical potential of 40 mV. This value is surprisingly high. Other substrates treated according to the invention can be assumed to have the same high potential, as all substrates treated according to the invention exhibited the same high killing rates.

According to a 28th embodiment, in the method according to any one of the preceding embodiments, it increases the electrical potential of a surface of the substrate by at least 10 mV, preferably at least 20 mV, more preferably at least 30 mV, even more preferably at least 35 mV, most preferably at least 40 mV, optionally measured according to the zeta-potential measuring method.

With this embodiment similar advantages may be achieved as in the previous embodiment. Thus, method may bear the potential of increasing the electrical potential to a surprisingly high amount. This may aid in killing bacteria effectively.

According to a 29th embodiment, in the method according to any one of the preceding embodiments the surface of the substrate has a pH value of at least 5.0, preferably at least 5.5, more preferably at least 6.0, most preferably at least 6.2, and/or at most 10, preferably at most 9, more preferably at most 8, particularly at most 7, and most preferably at most 6.8.

With this embodiment the value of the pH is not too high and not too low. Too low values are thus avoided, which bears the potential that a skin of a user does not get adversely affected. Further, the pH is not too high. Thus, this may provide for proper adherence and antimicrobial activity. Substantially a good compromise may thus be found between pH values that allow a good antimicrobial activity whilst not damaging a skin of a user touching the substrate.

According to a 30th embodiment, in the method according to any one of the preceding embodiments the substrate is not a plastic substrate, in particular not a synthetic textile material.

According to a 31st embodiment, in the method of the preceding embodiment the substrate is not a polyester substrate and/or not a polyethylenterephthalat (PET) substrate, optionally wherein the substrate does not comprise polyester and/or does not comprise polyethylenterephthalat (PET).

A 32nd embodiment of the invention is directed an antimicrobial, in particular a self-disinfecting substrate obtainable by a method according to any one of the preceding embodiments.

According to an 33rd embodiment an antimicrobial, in particular a self-disinfecting substrate, particularly a substrate according to any one of the preceding embodiments, wherein [2-(methacryloyloxy)ethyl]trimethyl-ammonium chloride (METAC monomer) is bound to the surface of the substrate.

According to a 34th embodiment, in the preceding embodiment the substrate is a glass substrate.

According to a 35th embodiment, in the 33rd embodiment the substrate is a nitrile rubber substrate, in particular a nitrile rubber glove.

According to a 36th embodiment, in the 33rd embodiment the substrate is a cellulose substrate, particularly cotton.

According to a 37th embodiment, in the 33rd embodiment the substrate is a silicon wafer.

According to a 38th embodiment, in any one of the 32nd to 37th embodiments the substrate is not a plastic substrate, in particular not a synthetic textile material.

According to a 39th embodiment, in the preceding embodiment the substrate is not a polyester substrate and/or not a polyethylenterephthalat (PET) substrate, optionally wherein the substrate does not comprise polyester and/or does not comprise polyethylenterephthalat (PET).

According to a 40th embodiment, in any one of the 32nd to 39th embodiments a surface of the substrate has an electrical potential of at least 10 mV, preferably at least 20 mV, more preferably at least 30 mV, even more preferably at least 35 mV, most preferably at least 40 mV, optionally measured according to the zeta-potential measuring method.

As explained above, it is believed that the higher the electrical charge of the surface of the substrate, the higher is its antimicrobial efficiency. This may include a positive charge caused by the METAC bound to the surface of the substrate. In an exemplary manner, the zeta-potential could be measured using a SURPASS device, for instance a device of the manufacturer Anton Paar. However, other suitable measurement devices could also be used.

According to a 41st embodiment, in any one of the 32nd to 40th embodiments the surface of the substrate has a pH value of at least 5.0, preferably at least 5.5, more preferably at least 6.0, most preferably at least 6.2, and/or at most 10, preferably at most 9, more preferably at most 8, particularly at most 7, and most preferably at most 6.8.

The value of the pH should not be too high and not too be low, in order to avoid that a skin of a user gets adversely affected. It should be noted that the lower the pH, the higher is the surface potential of the substrate, and therefore the antimicrobial activity. Substantially a good compromise may thus be found between pH values that allow for a good antimicrobial activity whilst not damaging a skin of a user touching the substrate.

According to a 42nd embodiment in any one of the 32nd to 41st embodiments, in the absence of [2-(methacryloyloxy)ethyl]trimethyl-ammonium chloride (METAC), the substrate has an antimicrobial activity against Escherichia coli ATCC 25922 and/or Staphylococcus aureus SA 113 of less than 90% (1 log) within 1 hour of contact time.

A 43rd embodiment of the invention is directed to an use of [2-(methacryloyloxy)ethyl]trimethylammonium chloride (METAC monomer) for rendering a substrate antimicrobial, in particular self-disinfecting, by applying the METAC monomer to the substrate, wherein the substrate after application of the METAC monomer is preferably a substrate according to any one of embodiments 32 to 42.

With this embodiment a self-disinfecting substrate could be achieved. This may have the advantage that the substrate may sanitize itself, preferably without any further action/ado. For instance, the substrate may be left by itself for an instant time and it may substantially be free of bacteria, whereas it comprised bacteria before.

According to a 44th embodiment, in the use according to the preceding embodiment, the substrate is a glass substrate, a nitrile rubber substrate, a cellulose substrate, particularly cotton, or a silicon wafer substrate.

According to a 45th embodiment, in the use according to any one of the 43rd or 44th embodiments, the substrate is not a plastic substrate, in particular not a synthetic textile material.

According to a 46th embodiment, in the use according to the preceding embodiment the substrate is not a polyester substrate and/or not a polyethylenterephthalat (PET) substrate, optionally wherein the substrate does not comprise polyester and/or does not comprise polyethylenterephthalat (PET).

According to a 47th embodiment, in the method according to any one of the 1st to 31st embodiments, the substrate according to any one of the 32nd to 41st embodiments, or the use of any one of the 43rd to 46th embodiments the substrate is antimicrobial if the substrate has an antimicrobial activity against Escherichia coli ATCC 25922 and/or Staphylococcus aureus SA 113 of at least 90% (1 log), preferably at least 99% (2 log), more preferably at least 99.9% (3 log), most preferably at least 99.99% (4 log) within 1 hour of contact time, and the substrate is self-disinfecting if the substrate has an antimicrobial activity against Escherichia coli ATCC 25922 and/or Staphylococcus aureus SA 113 of at least 99.999 (5 log) within 10 minutes of contact time, preferably within 5 minutes of contact time.

With this embodiment, advantageously a high antimicrobial activity may be achieved. The test methods should be performed according to a standard which is suitable for the respective substrate. E.g., the ASTM standard E 2149-10 or the AATCC test method 100-2012/2019 can be used if textiles or fabrics are tested. The AATCC test method 100-2019 represents an update and revised version of the AATCC test method 100-2012. Other suitable test methods may be applied according to the substrate being examined. In preferred embodiments AATCC 100-2019 is used for textile and ATCC 25922 for nitrile and for non-porous surfaces like glass.

### BRIEF DESCRIPTION OF THE DRAWINGS

- Figure 1a:: shows three exemplary substrates, nitrile rubber, cotton and glass, which are rendered antimicrobial in embodiments of the invention;
- Figure 1b:: shows a process of making a nitrile film antimicrobial using METAC, according to a preferred embodiment of the invention;
- Figure 2:: shows a process of making a cotton cloth antimicrobial using METAC, according to a preferred embodiment of the invention;
- Figure 3:: shows the structural formulas of the METAC monomer and of the photoinitiators TPO and LAP used in preferred embodiments of the invention;
- Figure 4:: shows a process of coating glass according to a preferred embodiment of the invention;
- Figure 5:: shows the functionalization of the surface of a glass by using a silane compound;
- Figure 6:: shows the chemical formula of cellulose, as used in form of cotton, and potential positions or groups to which METAC possibly can bind;
- Figure 7:: shows a spectrum of the METAC monomer, uncured nitrile and two times METAC-treated cured nitrile;
- Figure 8a:: shows a preparation of test samples for measurements of antimicrobial activity according to a preferred embodiment of the invention;
- Figure 8b:: shows the optical density (OD600, 600 nm wavelength) for different amounts of METAC in a solution;
- Figure 8c:: shows the results of antimicrobial activity measurements of Si-wafer substrates regarding *Escherichia coli* ATCC 25922;
- Figure 9:: (left) shows the results of antimicrobial activity measurements of a cotton substrate regarding *Escherichia coli* ATCC 25922; (right) shows the results of antimicrobial activity measurements of a cotton substrate regarding *Staphylococcus aureus* SA 113;
- Figure 10:: (left) shows antimicrobial activity measurements of a nitrile substrate regarding *Escherichia coli A*TCC 25922; (right) shows the results of antimicrobial activity measurements of a leached nitrile substrate regarding *Escherichia coli* ATCC 25922;
- Figure 11:: shows leaching properties of a METAC coating on nitrile based on conductivity measurements over time.

### DEFINITIONS

Unless otherwise stated, the term "**substantial**" or "**substantially**" as used in the present context may be understood to a great or significant extent or for the most part or essentially.

The term "**antimicrobial**" relates to the ability to kill at least some types of microorganisms, or to inhibit the growth or reproduction of at least some types of microorganisms. Said term relates to any compound, agent, product or process that is harmful to one or more microorganism as used in the context of the present invention. Preferably, the one or more microorganisms get destroyed or inactivated by the "antimicrobial" product or process. The term **"antimicrobial agent"** means any substance or combination of substances which kills, inactivates or prevents the growth of a microorganism, or is capable of rendering a substrate antimicrobial. The terms **"microorganism"** and **"microbe"**, which are used interchangeably in the context of the present invention, are defined to comprise any organism too small to be seen by the unaided eye, such as single-celled organisms or viruses. In particular, these terms cover prokaryotes including bacteria and archaea, eukaryotes including protists, animals like dust mites or spider mites, fungi, and plants like green algae, as well as viruses.

A substrate can be said to be "**self-disinfecting**" if it destroys substantially all - e.g. 99.999% (5 log) - of the microbes of a certain type (e.g. *Escherichia coli* ATCC 25922 and/or *Staphylococcus aureus* SA 113) located on its surface within a short period of time (e.g. 5 or 10 minutes).

The "**zeta-potential**" is measured using a specific measurement method (the "**zeta-potential measuring method**") of the electrical potential at the slipping plane, i.e. the interface separating mobile fluid from fluid that remains attached to the surface. In an exemplary manner, the zeta-potential could be measured using a SURPASS device, for instance a device of the manufacturer Anton Paar. However, other suitable measurement devices could also be used.

Unless otherwise stated, the percentages stated in here are based on weight-percentage.

### DETAILED DESCRIPTION OF THE PREFERRED EMBODIMENTS

In the following, exemplary worked embodiments of the present invention are described in more detail. However, the present invention is not limited to these, and a multitude of other embodiments are applicable without departing from the spirit of the invention.

### Substrates

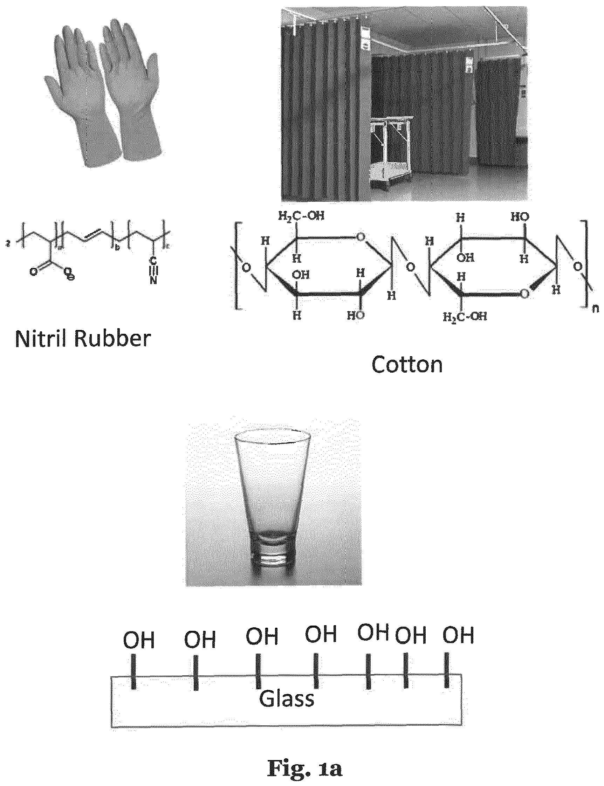

Fig. 1a shows three substrates, nitrile rubber, cotton and glass, which can be used according to embodiments of the invention. Generally, the METAC monomer can be bound to a multitude of substrates. In particular, the substrates depicted in Fig. 1a are often used in the health-care and life-style sector. These substrates can be rendered antimicrobial by embodiments of the invention. For instance, for hospitals, nitrile rubber gloves can be provided which show a high antimicrobial efficiency and provide for substantially antimicrobial environments when using such gloves. Furthermore, cotton, as for instance applied in scrubs or curtains, can be made antimicrobial and thereby provide for substantially antibacterial environment in rooms of patients or rooms for surgery or the like. Another important substrate is glass, since it is used for many applications. Ensuring for a substantially antibacterial environment when using glass substrates is very beneficial, for instance if glass is used for windows, for drinking vessels/cups/glasses/bottles, but also touchscreens which are used by a multitude of persons, for example in ATMs.

### Nitrile film coating

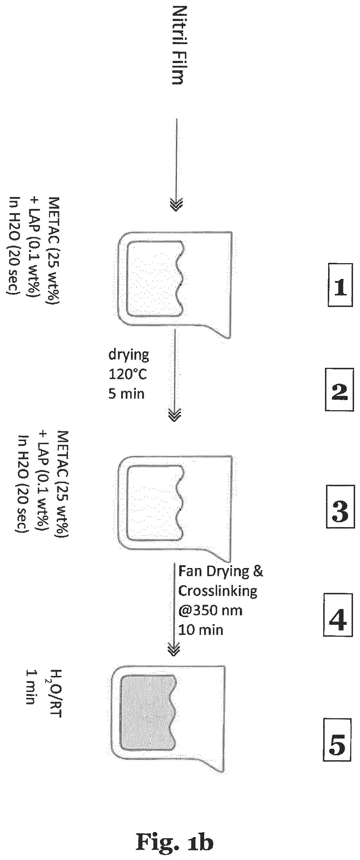

Fig. 1b shows a process of making a substrate antimicrobial according to an exemplary embodiment of the invention. In this exemplary embodiment, the substrate is a nitrile film.

In a first step of this process, a liquid preparation was applied to a nitrile film as a substrate. The liquid preparation was a solution comprising 25% of METAC, 0.1% of lithium phenyl(2,4,6-trimethylbenzoyl)phosphinate (LAP) and water. In this case, (LAP) is used as the photoinitiator.

The application was carried out by dipping the nitrile film into the preparation for 20 sec, but this is not limiting, as the application could also be performed for longer or shorter times, or by other ways of application such as spraying.

Subsequently, the nitrile film was dried by a fan at a temperature of 120 °C for 5 min. The drying temperature, the drying time and any means used for drying here are not limiting and may depend on the substrate to be dried.

In a third step, the nitrile film was dipped again into the liquid preparation for 20 sec, and in a fourth step, the substrate was dried again. The process steps of application of the preparation to the substrate and drying the substrate could also be repeated three or more times.

To achieve binding of the METAC monomer and crosslinking, the nitrile film with the dried preparation applied to it were irradiated with ultraviolet (UV) light at a wavelength of 350 nm. Any wavelength between 200 to 500 nm may be used, preferably of between 300 to 400 nm. This fifth step was performed for a preferred period of 10 min, but this period is not limiting. For instance, lower times were also possible.

Subsequently, in a sixth step, the substrate was washed in water, at room temperature for about 1 min. Longer or shorter time periods are also possible within the present invention, and the washing liquid may comprise other substances such as detergents.

From this test results measurements were taken that revealed an electrical potential of at least 40 mV according to the zeta-potential measurement method. This provided for very high antimicrobial activity of more than 5 log in a short period of time (as discussed below in section "Antimicrobial Studies"). The remaining tests of the remaining substrates revealed an equally high antimicrobial activity or even a higher antimicrobial activity. Accordingly, the electrical potential must be equally high or even higher according to the zeta-potential measurement method as compared to the nitrile substrate.

### Cotton coating

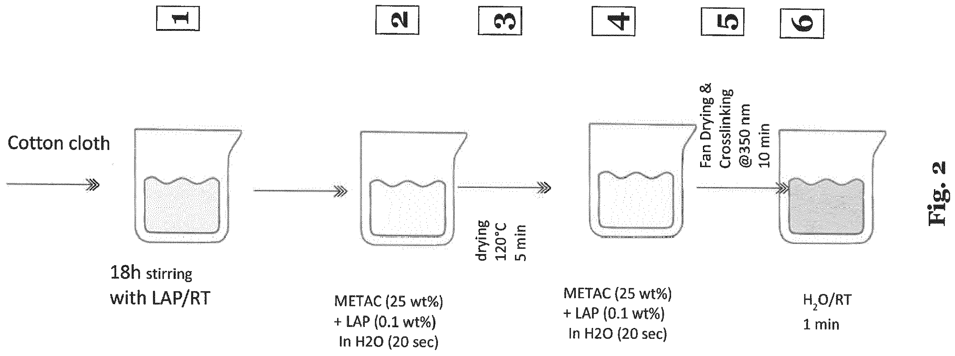

Fig. 2 shows a process of making a substrate antimicrobial according to an exemplary embodiment of the invention, wherein the substrate is a cotton cloth.

In a first step of this process, the cotton cloth was pre-treated with a solution comprising LAP as a photoinitiator, at room temperature. The cotton cloth was immersed and stirred in this solution for about 18 hours. Depending on the temperature of the solution, lower or higher time periods are also possible. This pre-treatment can be regarded as an exhaustion process. It was found that this pre-treatment could be beneficial in improving the bonding in a later step. However, in other examples it might also be possible to perform this step for less than 18 hours or, do not perform this step.

In a second step of this process, a liquid preparation was applied to the cotton cloth. The liquid preparation was a solution comprising 25% of METAC, 0.1% of LAP and water. The cloth was dipped into the solution for 20 sec, but it could also be done for longer or shorter times, and it may also be done by other means of applications, such as spraying.

Subsequently, in a third step, the cloth was dried by a fan at a preferred temperature of 120 °C for 5 min. In the drying step, the water content of the solution into which the cotton cloth was dipped is evaporated. The drying temperature, the drying time and any means used for drying mentioned here are not limiting. E.g., in industrial applications, drying will typically be carried out by means of stenter.

Then, in a fourth step, the liquid preparation was applied again to the cotton cloth, just like in the second step and in a fifth step, the substrate was dried in the same manner as described for the fourth step. The sequence of application of the preparation and drying could also be repeated three or more times.

In a sixth step, crosslinking was performed by triggering the reaction between the cotton cloth and METAC by irradiating the cloth with ultraviolet (UV) light at a wavelength of between 200 to 500 nm, preferably of between 300 to 400 nm or at 350 nm as is the case in this exemplary embodiment. This sixth step was performed for a preferred period of 10 min, but this period is not limiting.

Subsequently, in a seventh step, the substrate was washed with water at room temperature for about 1 min. Longer or shorter time periods and other washing liquids are also possible.

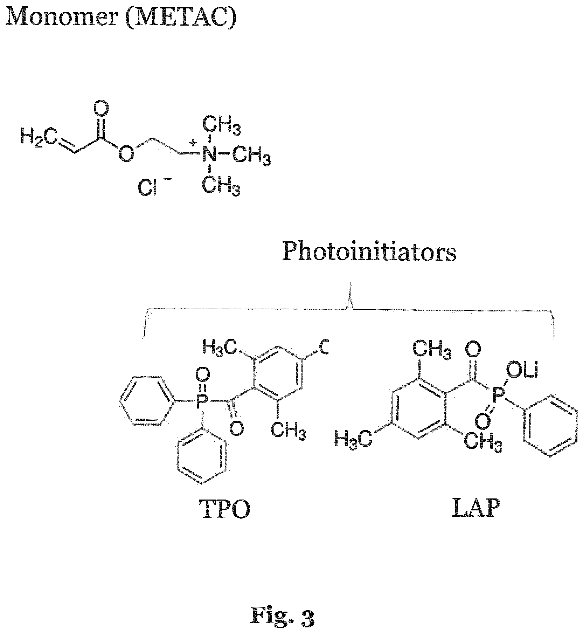

Fig. 3 shows the chemical formula of [2-(methacryloyloxy)ethyl]trimethylammonium chloride (METAC) as used in the present invention. Furthermore, the chemical formulae of two exemplary photoinitiators are shown, that is TPO and LAP. Those photoinitiators are compounds that are preferably used for initiating a reaction of the METAC monomer with functional groups on the substrate under the influence of UV-light.

### Glass coating process

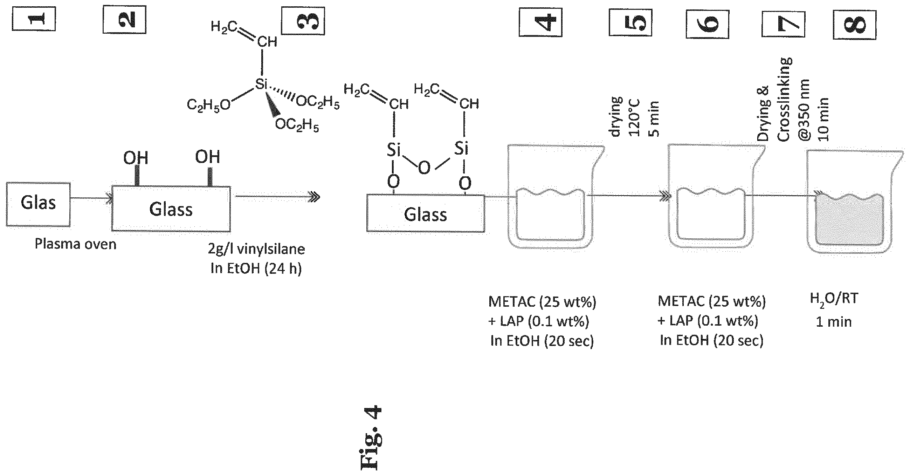

Fig. 4 shows a process of coating a glass according to an exemplary embodiment of the invention, in order to render the glass antimicrobial.

In a first step of this process, a glass substrate is provided.

In a second step, the glass was subjected to a plasma treatment in a plasma oven. This provides for the formation of OH-groups on the surfaces of the glass.

In a third step, a silane compound was applied to the plasma-treated glass, in this example 2g/l vinylsilane in an EtOH (ethanol) solution, for 24 h. The glass can be fully immersed into such a solution. The silane compound binds to the reactive OH groups formed on the surface of the glass to provide a pre-treated glass. The ethanol is preferably used so that the vinylsilane does not react as it could be the case if water was used instead of ethanol.

In a fourth step of this process, a liquid preparation was applied to the pre-treated glass by dipping the glass into the preparation. The liquid preparation was a solution comprising 25% of METAC, 0.1% of LAP and EtOH (Ethanol). Application was carried out for 20 sec but could also be done for longer or shorter times, or by other ways of application such as spraying.

In a fifth step, the glass was dried at a preferred temperature of 120 °C for 5 min by means of a fan. Drying comprises that the ethanol comprised in the solution in which the glass is dipped is evaporated. The drying temperature, the drying time and any means used for drying mentioned here are not limiting.

In a sixth step, the liquid preparation is applied again to the glass, followed by drying. The sequence of application of the preparation and drying could also be repeated three or more times.

Then, in a seventh step, crosslinking i.e. a binding reaction between the treated glass and METAC was triggered, by irradiation of the treated glass with ultraviolet (UV) light at a wavelength of between 200 to 500 nm, preferably of between 300 to 400 nm or at 350 nm as is the case in this exemplary embodiment. This step was performed for a preferred period of 10 min, but this period is not limiting.

Subsequently, in an eighth step, the coated glass may be washed in water at room temperature for about 1 min. Longer or shorter time periods are also possible.

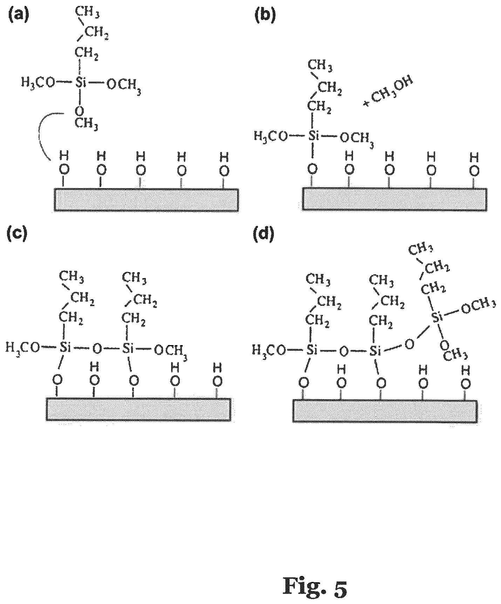

Fig. 5 shows in an exemplary manner of how a silane compound can bind to OH groups of a substrate. The substrate can be for instance glass, as shown in Fig. 4. Once the glass is provided with functional OH-groups, the silane compound can preferably covalently bond to it.

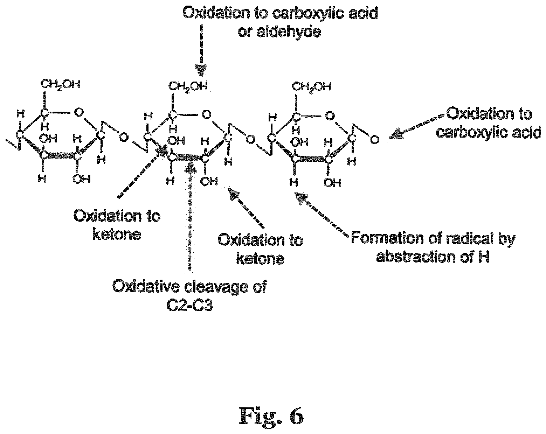

Fig. 6 shows in an exemplary manner of how METAC could react with cotton, without being limited thereto. The figure shows possible positions in the cellulose chain, at which it is believed that METAC could react.

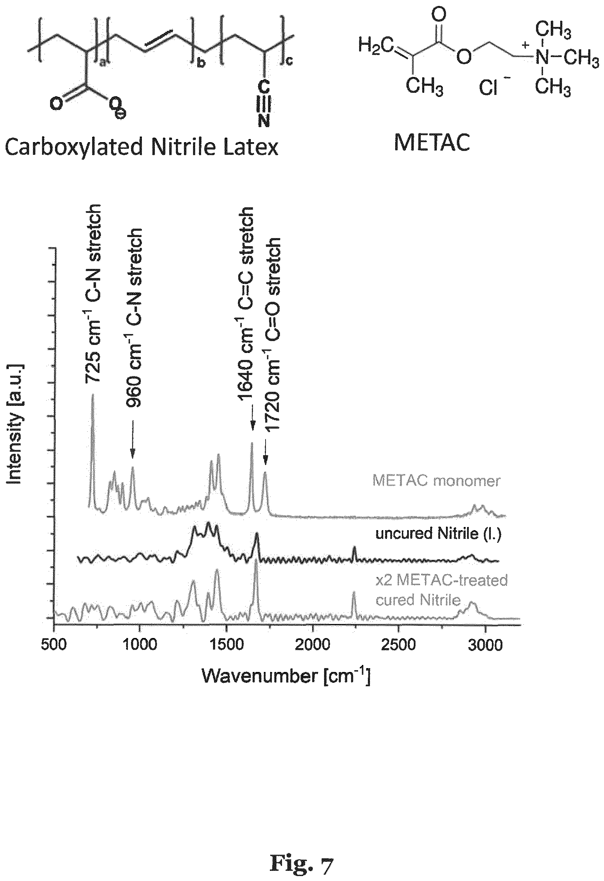

Fig. 7 shows the intensity of a METAC monomer, an uncured nitrile, such as carboxylated nitrile latex, and a two times METAC-treated cured nitrile, versus the intensity. It is believed that the disappearance of the C=C stretch of METAC indicates a successful reaction.

### Antimicrobial Studies

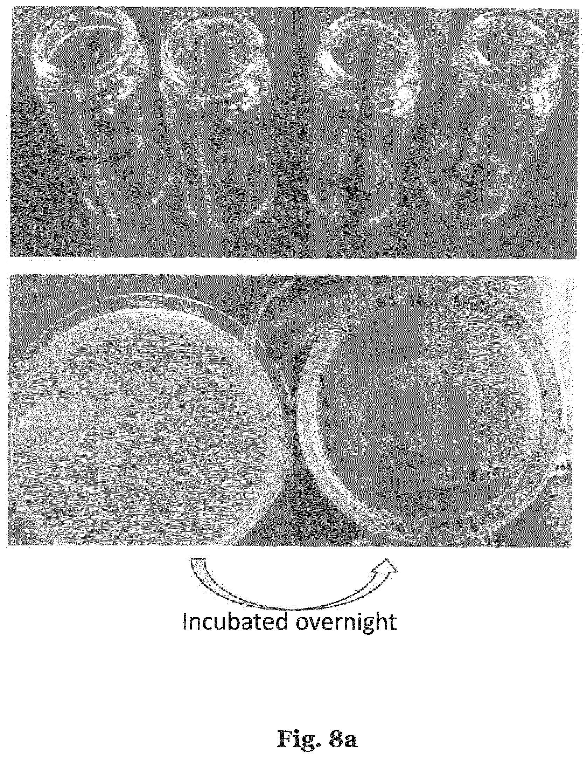

Fig. 8a shows in an exemplary embodiment of how tests were performed to investigate the antimicrobial activity of the worked examples.

A bacteria droplet with 6 × 10⁵ colony forming units (CFU) of *Escherichia coli* (E.coli) was placed onto a latex. The allowed incubation time was set to 5 or 30 min at room temperature. Then, wells were filled with 2 mL of buffer and surviving cells were extracted (by vortexing or sonication). The extracted cells were then quantified by serial dilution and plating on agar.

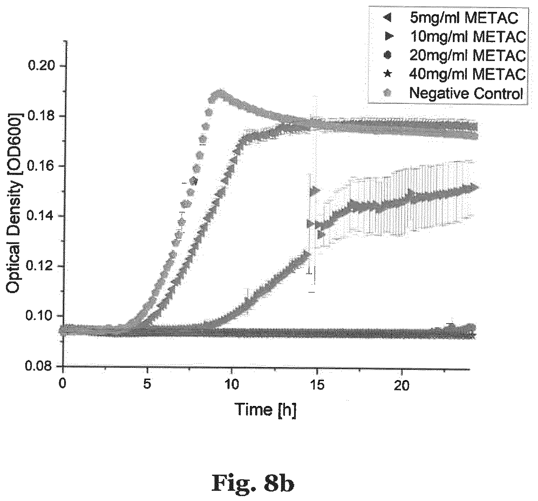

Fig. 8b shows in an exemplary antimicrobial activity of a METAC solution against *Escherichia coli* (E.coli). It is apparent that a METAC solution must have rather high concentration to show an antimicrobial effect. In particular, 40 mg/ml of METAC is required to stop E.coli growth.

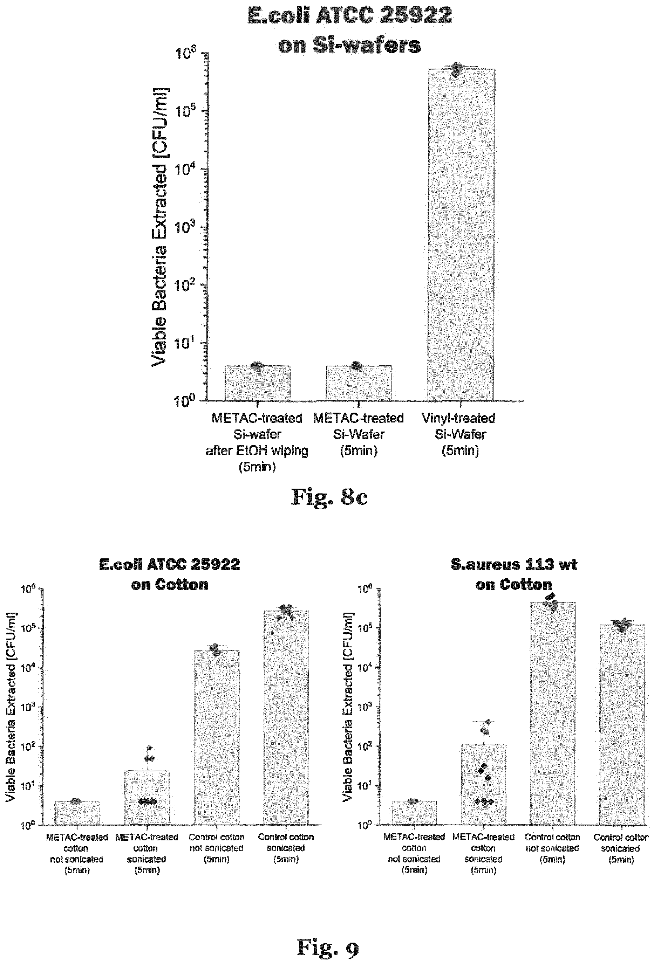

Fig. 8c shows test results with regard to the antibacterial activity of coated Si-wafers against *Escherichia coli* ATCC 25922. The Y-axis shows viable bacteria extracted in the colony forming unit, CFU, per ml. The vinyl-treated Si-wafer shows about or slightly less than 10⁶ (10 to the power of 6) CFU/ml of after *Escherichia coli* 5 min. The METAC treated Si-wafer shows about 3 CFU/ml of after *Escherichia coli* 5 min. The METAC treated Si-wafer after additional wiping with ethanol also shows about 3 CFU/ml of after *Escherichia coli* 5 min. Thus, the bacterial reduction of the substrate without METAC treatment as compared to the substrates with METAC treatment amounts to more than 5 log in 5 mins. This is attributed to the METAC coating of the Si-wafers, which renders the wafers highly antimicrobial.

Fig. 9 (left) shows test results with regard to the antibacterial activity of coated cotton against *Escherichia coli* ATCC 25922. Fig. 9 (right) shows test results with regard to the antibacterial activity on cotton against *Staphylococcus aureus* SA 113. The METAC coated cotton provides for a 5 log reduction in 5 minutes.

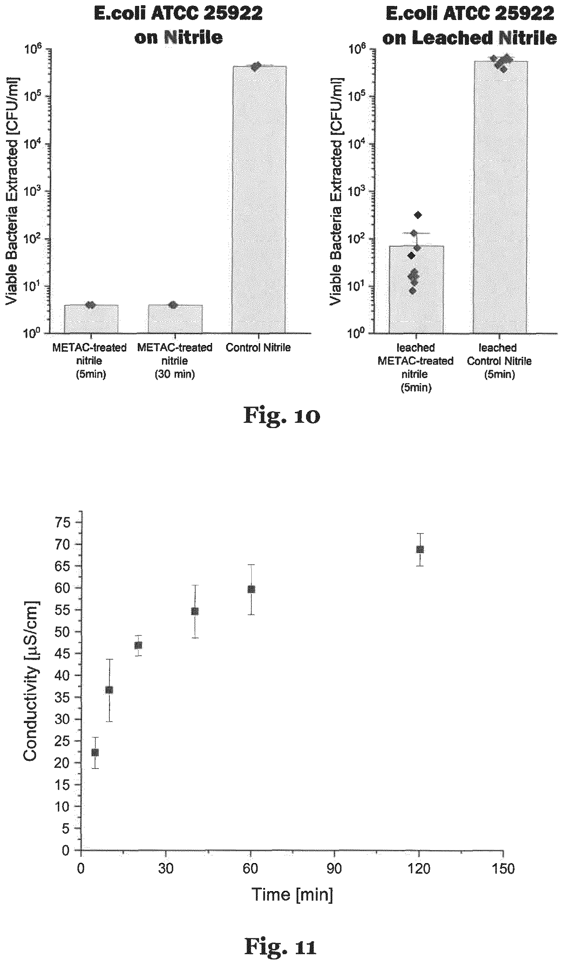

Fig. 10 (left) shows test results with regard to the antibacterial activity of coated nitrile, such as coated nitrile rubber films, against *Escherichia coli* ATCC 25922. The Y-axis shows viable bacteria extracted in the colony forming unit, CFU, per ml. The control nitrile sample shows about or slightly less than 10⁶ (10 to the power of 6) CFU/ml of *Escherichia coli* after 5 min. The METAC treated nitrile shows about 3 CFU/ml of *Escherichia coli* after 30 min. Thus, the bacterial reduction of the substrate without METAC treatment as compared to the substrates with METAC treatment amounts to more than 5 log in 5 mins. This is attributed to the METAC coating of the substrate, which provides for highly antimicrobial substrates. This is a surprisingly high killing rate for such a short time, attributed to the high surface charges by way of the METAC monomers bound to the surface of the substrate.

Fig. 10 (right) shows test results with regard to the antibacterial activity of leached nitrile against *Escherichia coli* ATCC 25922. Leaching was done over 8 h in water. The comparison shows the beneficial antimicrobial activity of METAC-treated leached nitrile as compared to a leached control nitrile. The latter has about 10⁶ (10 to the power of 6) CFU/ml of *Escherichia coli* after 5 min. The METAC-treated leached nitrile has about less than 10² (10 to the power of 2) CFU/ml of *Escherichia coli* after 5 min. Thus, a reduction of more than 4 log was achieved.

Fig. 11 shows the leaching behavior of METAC-coated nitrile via conductivity measurements. Leaching influences the electrical properties of an antimicrobial substrate. In Fig. 11, the increase in conductivity reflects the degree of leaching. As is shown, the leaching was relatively low.

## Claims

1. A method for rendering a substrate antimicrobial, in particular self-disinfecting, said method comprising the following steps:
(a) applying [2-(methacryloyloxy)ethyl]trimethylammonium chloride (METAC monomer) and an initiator to a substrate,
(b) optionally drying the substrate, and
(c) triggering a reaction between the substrate and the METAC monomer; whereby the electrical potential of the surface of the substrate to which the METAC monomer is applied is increased by at least 10 mV, preferably at least 20 mV, more preferably at least 30 mV, even more preferably at least 35 mV, most preferably at least 40 mV, optionally when measured according to the zeta-potential measurement method.

2. The method of any the preceding claim, wherein the initiator is a photoinitiator and the reaction between the substrate and the METAC monomer is triggered by irradiating the substrate with ultraviolet (UV) light.

3. The method of the preceding claim, wherein the photoinitiator is water-soluble, particularly wherein the photoinitiator is lithium phenyl(2,4,6-trimethylbenzoyl)phosphinate (LAP).

4. The method according to any one of the preceding claims, wherein at least part of the METAC monomer and at least part of the initiator are applied to the substrate as a liquid preparation comprising the part of the METAC monomer and the part of the initiator, and wherein the liquid preparation comprises the METAC monomer in an amount of 5 to 75% by weight, preferably in an amount of 6 to 60% by weight, more preferably in an amount of 10 to 50% by weight, particularly in an amount of 15 to 40% by weight, and most preferably in an amount of 20 to 30% by weight, and/or the photoinitiator in an amount of 0.01 to 0.5% by weight, particularly in an amount of 0.02 to 0.25% by weight, more particularly in an amount of 0.05 to 0.15% by weight, based on 100% by weight of the liquid preparation.

5. The method of any one of the preceding claims, wherein the sequence of the applying step (a) and the drying step (b) is carried two or more times.

6. The method of any one of the preceding claims, wherein the substrate is a glass substrate.

7. The method of the preceding claim, wherein the glass substrate has been produced by a process comprising a step of treating the surface of the glass to which the METAC monomer is to be applied by a plasma.

8. The method of the preceding claim, wherein the surface of the glass to which the METAC monomer is to be applied has been modified by a silane compound.

9. The method of any one of claims 1 to 5, wherein the substrate is a nitrile rubber substrate, particularly a nitrile rubber glove.

10. The method of any one of claims 1 to 5, wherein the substrate is a cellulose substrate, particularly cotton.

11. The method of the preceding claim, wherein the cotton has been pre-treated with a solution comprising an initiator, preferably a photoinitiator or a thermoinitiator by immersing the cotton in the solution, preferably for a period of time of at least 15 minutes, more preferably of at least 30 minutes, even more preferably of at least one hour, particularly of at least 2 hours, most preferably of at least 4 hours.

12. An antimicrobial, in particular a self-disinfecting substrate obtainable by a method according to any one of the preceding claims.

13. An antimicrobial, in particular a self-disinfecting substrate, particularly a substrate according to any one of the preceding claims, wherein [2-(methacryloyloxy)ethyl]trimethyl-ammonium chloride (METAC monomer) is bound to a surface of the substrate, whereby the electrical potential of the surface is at least 10 mV, preferably at least 20 mV, more preferably at least 30 mV, even more preferably at least 35 mV, most preferably at least 40 mV, optionally when measured according to the zeta-potential measurement method.

14. Use of [2-(methacryloyloxy)ethyl]trimethylammonium chloride (METAC monomer) for rendering a substrate antimicrobial, in particular self-disinfecting, by applying the METAC monomer to the substrate, wherein the substrate after application of the METAC monomer is preferably a substrate according to any one of claims 12 to 13.

15. The method according to any one of claims 1 to 11, the substrate according to any one of claims 12 to 13, or the use of claim 14, wherein the substrate is antimicrobial if the substrate has an antimicrobial activity against *Escherichia coli* ATCC 25922 and/or *Staphylococcus aureus* SA 113 of at least 90% (1 log), preferably at least 99% (2 log), more preferably at least 99.9% (3 log), most preferably at least 99.99% (4 log) within 1 hour of contact time, and the substrate is self-disinfecting if the substrate has an antimicrobial activity against *Escherichia coli* ATCC 25922 and/or *Staphylococcus aureus* SA 113 of at least 99.999 (5 log) within 10 minutes of contact time, preferably within 5 minutes of contact time.
